# EUROPEAN PATENT APPLICATION

(11) **EP 1 168 709 A2**
(43) Date of publication of application: **02.01.2002**
(21) Application number: 01114765.9
(22) Date of filing: 25.06.2001
(51) Int. Cl.: H04L 12/14

(54) **Charging control system and method**

(30) Priority: 30.06.2000 JP 2000199844
(71) Applicant: KABUSHIKI KAISHA TOSHIBA, Kawasaki-shi, Kanagawa-ken 210-8572 (JP)
(72) Inventor: Arai, Yasunori, Fuchu-shi, Tokyo (JP)
(74) Representative: HOFFMANN - EITLE

(57) **Abstract**

A charging rate server 7 acquires the access concentration degree to each contents server 4 periodically and determines the charging rate for each contents server 4 in response to the current access concentration degree acquired. Information concerning the current charging rate determined for each contents server 4 by the charging rage server 7 is sent through the Internet 1 to a charging unit 8, which then charges each user terminal 6 in response to the charging rate, and the information concerning the current charging rate is also sent to the user terminal 6 as the value of the current charging rate. Such variable charging rate control by server, of considering the access concentration degree for each accessed contents server 4 for changing the charging rate is performed, whereby it is made possible to improve response between the server and the user terminal.

## Description

### BACKGROUND OF THE INVENTION

### 1. Field of the Invention

This invention relates to a charging control system for use in a communication network, and a terminal connectable to the communication network for use.

### 2. Description of the Related Art

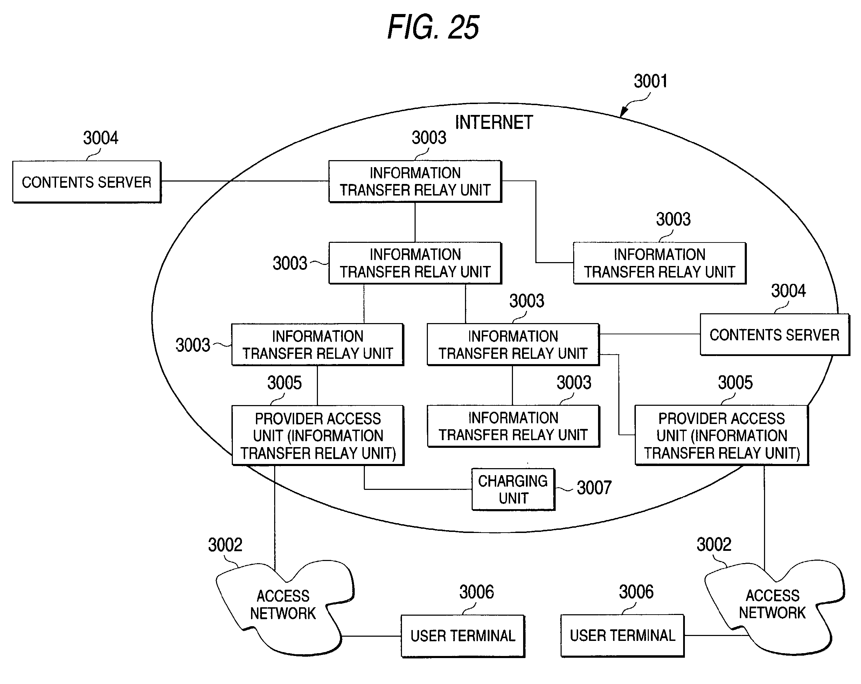

In recent years, providing various services through communication networks has been advanced with development of the Internet technology and the widespread use of user terminals represented by portable telephones, personal computers, etc. FIG. 25 shows the general configuration of a communication system in the related art.

In the system, an information communication network is made up of the Internet 3001 and access networks 3002 implemented as radio telephone networks, public telephone networks, etc. Contents servers 3004 and user terminals 3006 are connected to the information communication network, thereby making up the system. Each request from one of the user terminals 3006 is sent through the access network 3002, a provider access unit 3005, and the Internet 3001 to the contents server 3004. A response from the contents server 3004 is sent on the reversed route to the user terminal 3006. The Internet 3001 comprises a large number of information transfer relay units 3003 connected like a net, as shown in the figure. The information transfer relay unit 3003, which serves as a kind of switch (router, etc.,), sees the information of the destination written in passed information and determines which output port the information is to be directed for.

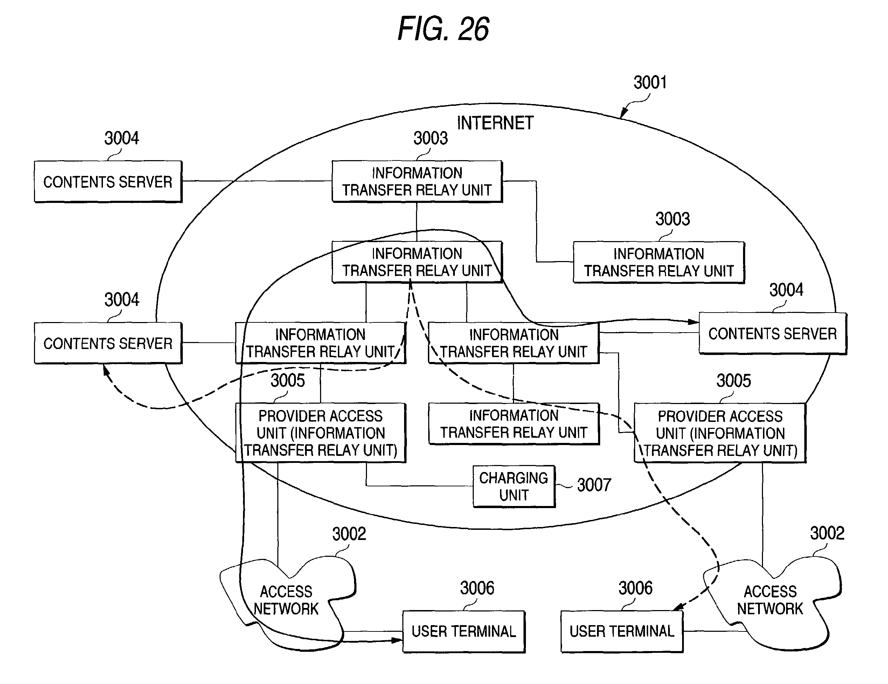

In the Internet, generally the route is only one way and the output port is determined uniquely from an input port and destination information and is unchanged unless special circumstances of fault recovery measures, etc., do not exist, as shown in FIG. 26. FIG. 26 shows how a plurality of user terminals 3006 access separate contents servers 3004, and each access route is basically one way as shown by the solid line or the dashed line in the figure. In this case, the same information transfer relay unit 3003 may be used in common between the routes.

Therefore, if the accessed contents servers 3004 are different, as heavy traffic occurs on an intermediate route, responsivity between the contents server 3004 and the user terminal 3006 is degraded. If a large number of users connect to the contents server 3004 at one time, the processing time of the server that can be allocated per user is lessened and thus server response is also degraded.

A charging unit 3007 is provided for charging for communications using the information communication network and monitors information transferred between each user terminal 3006 and each contents server 3004, thereby charging each user for communications. The current charging systems generally provided (communication charge of the access network 3002 and Internet connection charge made by the provider access unit 3005) are roughly classified into time charging and data amount charging. The time charging system determines the rate per unit time (for example, 10 yen for 30 seconds or the like) and measures the time period from the start of connection by the user to the end of the connection, then charges the user for the connection based on the time. The data amount charging system determines the charging rate per data amount (for example, 0.3 yen per 128 bytes or the like) when information is transferred using the access network 3002 between the user and the server, and charges the user in response to the transferred data amount.

As described above, when a large number of user terminals 3006 share the same contents server 3004 or the same information transfer relay unit 3003 in the information communication network, there is a problem of degradation of the response between the contents server 3004 and the user terminals 3006. The degradation of the response results in another problem, namely, the user is bound for a long time more than necessary to receive the service. Particularly, the user does not know where heavy traffic occurs, and thus exerts guesswork as to whether he or she should wait or once disconnect, then again try at a later point in time. If some users abandon connection until such an extent that heavy traffic is eliminated, response is recovered, but a method of narrowing down the number of users impartially and efficiently is not provided at present. Further, when the contract charging system is based on the connection time, the charge amount is increased although substantial service is not received; this is also a problem.

### SUMMARY OF THE INVENTION

It is therefore an object of the invention to provide a charging control system and a terminal for making it possible to adjust the number of access times to each server impartially and efficiently and minimize degradation of response between the server and the user terminal.

To the end, according to the invention, there is provided a charging control system being placed on a communication network involving charging for controlling the charging, the charging control system comprising: a section for detecting the access concentration degree to a server for providing services for user terminals through the communication network, a section for determining a charging rate for communication involving access to the server based on the detected access concentration degree so that the charging rate is changed in response to the access concentration degree to the accessed server, and charging rate information providing section for providing information concerning the determined charging rate for a requesting party through the communication network.

According to the charging control system, the charging rate for communication involving access to each server is determined dynamically in response to the current access concentration degree to the server and the information concerning the determined charging rate is provided for the requesting party such as the user terminal, for example. Such variable charging rate control by server, of considering the access concentration degree for each accessed server for changing the charging rate is used and the information concerning the current charging rate is provided for the requesting party through the communication network, whereby the number of access times to the concentratedly accessed server can be automatically adjusted impartially and efficiently as a result of the action of the market principles, and it is made possible to minimize degradation of response between the server and the user terminal.

Preferably, particularly the information concerning the determined charging rate is provided for the user terminal accessing the server. Thus, it is made possible to inform the accessing user of the current charging rate in real time, so that it is made possible to automatically adjust the number of access times more efficiently.

A message from the user terminal to the server contains information indicating the maximum allowable charging rate, and relay control section for holding message relay between the user terminal and the server if the current charging rate determined exceeds the maximum allowable charging rate is further provided, whereby it is made possible to restrict the number of access times to the server not only according to determination of the user, but also automatically. If message relay is held, preferably information indicating that message relay is held is sent to the user terminal. In doing so, the user can distinguish the fact from a communication error, etc., and useless confusion can be avoided.

It is desirable that the charging control system further includes a section for preparing charging rate statistical information indicating time-series variations in the charging rate based on the change state of the charging rate over a predetermined period of time in the past, and a section being responsive to a request from a user terminal for providing the charging rate statistical information for the requesting user terminal. In doing so, the user can predict variation in the charging rate and thus can access the server in a time zone where the charging rate lowers, namely, in a time zone where the access concentration degree is low and responsivity is high.

The charging rate statistical information is prepared for each of a plurality of predetermined servers, and charging rate statistical information retrieval section being responsive to an inquiry sent from a user terminal for retrieving the server that can be accessed under an advantageous condition at present from among the plurality of servers based on the charging rate statistical information corresponding to each of the plurality of servers and providing the retrieval result for the requesting user terminal is further provided, whereby a guide for a list of the servers that can be accessed most efficiently at present among the servers to which the user wants to connect or the like can be provided.

Here, the servers to be retrieved may be specified explicitly from the user terminal; the servers to be retrieved can also be selected automatically based on the access frequency information of the user terminal.

The charging control system further includes a section for detecting traffic on the route between the user terminal and the server for each server to be accessed by the user terminal, and a section for determining the server that can be accessed under the advantageous condition at present from among the plurality of servers based on the current charging rate corresponding to each server and the detected traffic, whereby it is made possible to provide a guide for a list of the servers that can be accessed under the most advantageous condition at present also considering the traffic on the route.

According to the invention, there is provided a terminal used as a user terminal in a communication system being responsive to the access concentration degree to an accessed server for determining a charging rate concerning communication involving access to the server, the terminal comprising
a section for receiving information concerning the current charging rate provided by the communication system, and a section for displaying the received information concerning the current charging rate on a screen.

In the terminal, the user can be informed of the current charging rate concerning the accessed server in real time, so that it is made possible for the user to easily determine whether to continue the connection or to voluntarily refrain from communication; consequently, it is made possible to minimize degradation of response caused by access concentration. Continuing or stopping the communication involving access to the server may be able to be controlled based on the received current charging rate and a preset value.

Further, the terminal can also be provided with the arrangement of retrieving the server that can be accessed under the most advantageous condition at present based on the charging rate statistical information and the traffic information.

### BRIEF DESCRIPTION OF THE DRAWINGS

FIG. 1 is a block diagram to show the general configuration of a communication system according to one embodiment of the invention.
FIG. 2 is a drawing to show an example wherein a contents server and a charging rate server are integrated in one piece in the communication system according to the embodiment of the invention.
FIG. 3 is a drawing to show a configuration wherein a charging rate statistic server is placed in the communication system according to the embodiment of the invention.
FIG. 4 is a block diagram to show the configuration of a charging rate information providing function provided in a user terminal used with the communication system according to the embodiment of the invention.
FIG. 5 is a block diagram to show one configuration of an automatic disconnection/reconnection function provided in a user terminal used with the communication system according to the embodiment of the invention.
FIG. 6 is a block diagram to show another configuration of an automatic disconnection/reconnection function provided in a user terminal used with the communication system according to the embodiment of the invention.
FIG. 7 is a drawing to describe protocol processing placed in a user terminal used with the communication system according to the embodiment of the invention.
FIG. 8 is a drawing to show an example of the data format of a message used with the communication system according to the embodiment of the invention.
FIG. 9 is a block diagram to show the configuration of a hold control function section placed in an information transfer relay unit used with the communication system according to the embodiment of the invention.
FIG. 10 is a drawing to describe a hold detection function provided in a user terminal used with the communication system according to the embodiment of the invention.
FIG. 11 is a block diagram to show the configuration of the contents server with a charging rate sending function used with the communication system according to the embodiment of the invention.
FIG. 12 is a block diagram to show the configuration of the contents server with a congestion degree information sending function used with the communication system according to the embodiment of the invention.
FIG. 13 is a block diagram to show the configuration of charging rate server used with the communication system according to the embodiment of the invention.
FIG. 14 is a block diagram to show the configuration of a charging rate statistic server used with the communication system according to the embodiment of the invention.
FIG. 15 is a block diagram to show the configuration of the user terminal with an availability information preparation function used with the communication system according to the embodiment of the invention.
FIG. 16 is a block diagram to show the configuration of a charging rate statistic retrieval server with an availability information preparation function used with the communication system according to the embodiment of the invention.
FIG. 17 is a block diagram to show the configuration of the user terminal using the charging rate statistic retrieval server in FIG. 16.
FIG. 18 is a block diagram to show the configuration of the user terminal having a charging rate statistical information acquisition function using use frequency history information, used with the communication system according to the embodiment of the invention.
FIG. 19 is a block diagram to show the configuration of the user terminal having an availability information acquisition function using use frequency history information, used with the communication system according to the embodiment of the invention.
FIG. 20 is a block diagram to show the configuration of the charging rate statistic retrieval server having a retrieval function using use frequency history information, used with the communication system according to the embodiment of the invention.
FIG. 21 is a block diagram to show the configuration of the information transfer relay unit with a use frequency history information providing function used with the communication system according to the embodiment of the invention.
FIG. 22 is a block diagram to show the configuration of the user terminal for acquiring use frequency history information from the information transfer relay unit in FIG. 21.
FIG. 23 is a block diagram to show the configuration of the user terminal with a load adaptive type service determination function used with the communication system according to the embodiment of the invention.
FIG. 24 is a block diagram to show the configuration of the information transfer relay unit with a load adaptive type service determination function used with the communication system according to the embodiment of the invention.
FIG. 25 is ablock diagram to show the general configuration of a communication system in a related art.
FIG. 26 is a drawing to describe concentration of access in the communication system in the related art.

### DETAILED DESCRIPTION OF THE PRESENT INVENTION

Preferred embodiments of the invention will be described in detail with reference to the accompanying drawings.

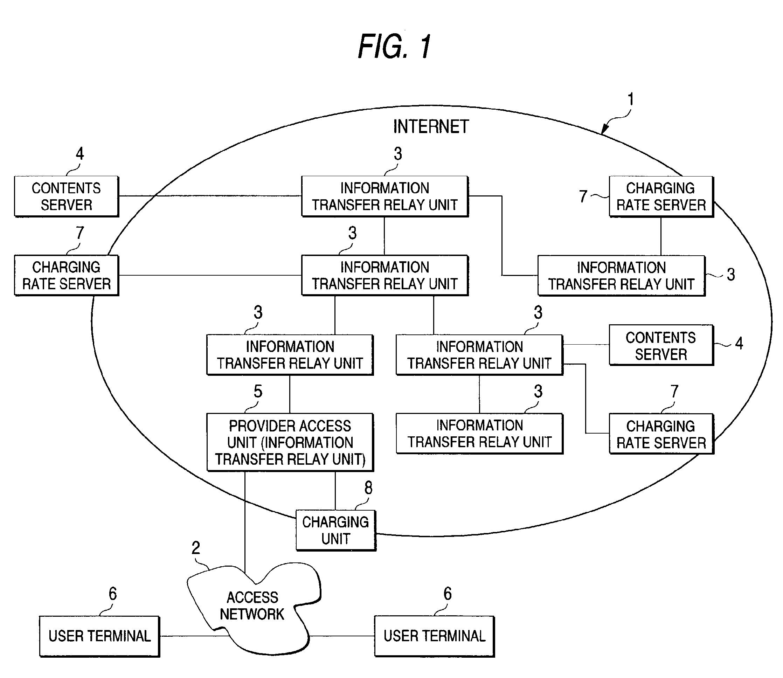

FIG. 1 shows the general configuration of a communication system using a charging control system according to one embodiment of the invention. In the communication system, an information communication network is made up of the Internet 1 and an access network 2. Contents servers 4 and user terminals 6 are connected to the information communication network, thereby making up the system. The Internet 1 comprises a large number of information transfer relay units 3 connected like a net, as shown in the figure. The information transfer relay unit 3, which serves as a kind of switch (router, etc.,), sees the information of the destination written in passed information and determines which output port the information is to be directed for.

Each request from one of the user terminals 6 is sent through the access network 2, a provider access unit 5, and the information transfer relay unit 3 in the Internet 1 to the accessed contents server 4. Aresponse from the contents server 4 is sent on the reversed route to the user terminal 6. The provider access unit 5 provides connection service to the Internet 1 for the user terminals 6 and also functions as an information transfer relay unit 3. The contents server 4 provides various services of providing contents, etc., for the user terminals 6. The contents server 4 also functions as an information transfer relay unit 3. Portable telephone terminals, personal computers, PDAs, etc., are used as the user terminals. 6.

The user terminal 6 is connected to the Internet 1 with intervention of the access network 2 and the provider access unit 5. The access network 2 is implemented as a radio telephone network such as a portable telephone network, a wire public telephone network, etc., for example. The user terminal 6 is first connected to the provider access unit 5 by the access network 2, then sends Internet protocol information. This information is sent on an appropriate route selected by the information transfer relay unit 3 to the target contents server 4.

Further, in the communication system, charging rate servers 7 are connected on the Internet 1. The charging rate server 7 acquires the access concentration degree (congestion degree) to each contents server 4 periodically and determines the charging rate for each contents server 4 in response to the current access concentration degree acquired. For example, if a time charging system is adopted, charging rate variation control of varying the value of the standard charging rate, for example, 10 yen for 30 minutes in response to the congestion degree is performed for communication charges, etc., via the access network 2; if a data amount charging system is adopted, charging rate variation control of varying the value of the standard charging rate, for example, 0.3 yen per 128 bytes in response to the congestion degree is performed for data communication charges, etc., to connect to the Internet 1 through the portable telephone network as the access network 2. Information concerning the current charging rate determined for each contents server 4 by the charging rage server 7 is transferred from the charging rage server 7 through the Internet 1 to the requesting party.

A charging unit 8 charges each user terminal 6; it acquires the charging rate information corresponding to the contents server 4 accessed by each user terminal 6 from the charging rage server 7 and charges each user terminal 6 in accordance with the charging rate information and the charging system. For example, for Internet connection service through the portable telephone network, the charging unit 8 is connected to the provider access unit 5 to perform the connection service, as shown in the figure . In this case, if the data amount charging system is adopted, the charging unit 8 counts the communication data amount (the number of packets) conducted through the provider access unit 5 for each user terminal 6 and charges each user in accordance with the count and the current charging rate of the accessed contents server 4 acquired from the charging rate server 7. If the time charging system is adopted, the charging unit 8 measures the time between logging in to and logging out from the provider access unit 5, and charges each user in accordance with the time and the current charging rate of the accessed contents server 4 acquired from the charging rate server 7.

Thus, in the embodiment, variable charging rate control by server, of changing the charging rate considering the access concentration degree for each accessed contents server 4 is performed.

The information concerning the current charging rate determined by the charging rate server 7 is also provided for each user terminal 6. For the user terminal 6 accessing the contents server 4, the current charging rate information concerning the accessed contents server 4 is transferred in real time, whereby each user can know the charging rate concerning the current data communications being executed and thus can determine whether to continue or discontinue the connection based on the charging rate. Transmission of the charging rate information from the charging rate server 7 to the user terminal 6 can also be performed through the accessed contents server 4 or the provider access unit 5.

When each contents server 4 provides more than one service, the access concentration degree may be acquired for each provided service and the charging rate may be determined for each service based on the access concentration degree. In this case, the charging rate information concerning the accessed server service is transferred to the user terminal 6 in real time. The charging rate concerning the target server service can also be acquired from the charging rate server 7 on demand in response to an acquisition request from the user terminal 6.

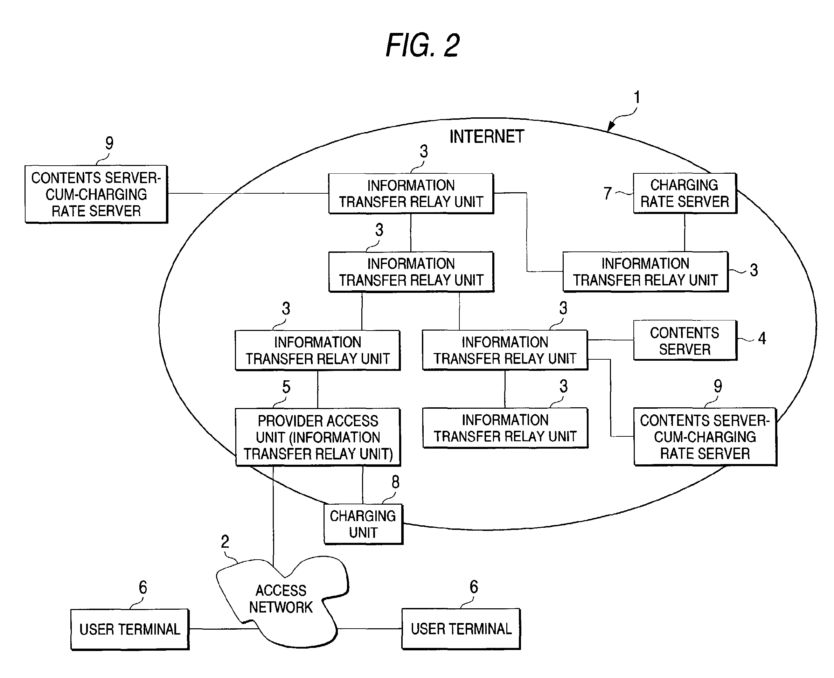

FIG. 2 shows an example wherein a contents server-cum-charging rate server 9 having the functions of both the contents server 4 and the charging rate server 7 described above is provided. In this case, the contents server-cum-charging rate server 9 determines the charging rate in response to the access concentration degree to the contents server-cum-charging rate server 9 and provides the charging rate for the user terminals 6 and the charging unit 5 through the Internet 1. For any other charging rate server 7, the contents servers 4 to be monitored are predetermined and the charging rate server 7 acquires the information concerning the access concentration degree from each of the contents servers 4 to be monitored and determines the charging rate for each contents server 4 to be monitored in response to the information concerning the access concentration degree. With the contents server-cum-charging rate server 9, the charging rate information can be contained in the contents destined for the user terminal 6 for transmission.

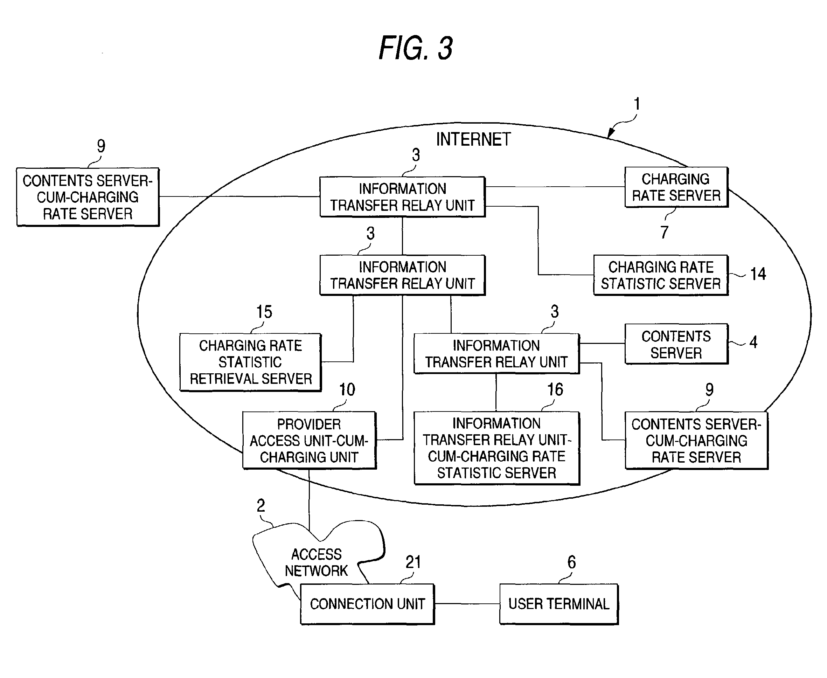

Next, an example of preparing charging rate statistical information indicating how the charging rate varies in time series concerning each contents server 4 and providing the charging rate statistical information for the user terminals 6 will be discussed with reference to FIG. 3.

That is, the access concentration degrees to each contents server 4 and each service often show statistical trend based on the elements of time zones, days of the week, dates, etc. Thus, a variation history of the charging rates is also provided for the user terminals 6 as statistical information, whereby the users can predict charging rate variation and thus can access the target contents server 4 on the date and time or time zone when the charging rate becomes low, namely, when the access concentration degree is low and responsivity is high. To realize this, a charging rate statistic server 14 and a charging rate statistic retrieval server 15 are provided in FIG. 3.

The charging rate statistic server 14 collects charging rate variations concerning each contents server 4 for a constant period of time and prepares and holds charging rate statistical information indicating how the charging rate varies in time series from a change state history over the past constant period for each contents server 4. The charging rate statistic server 14 may also be provided with the function of the information transfer relay unit 3 for use as an information transfer relay unit-cum-charging rate statistic server 16.

The charging rate statistic retrieval server 15 retrieves the charging rate statistical information concerning the corresponding contents server 4 from the charging rate statistic server 14 in response to a request for acquiring the charging rate statistical information, sent from the user terminal 6 and provides the charging rate statistical information for the user terminal 6. A list of a plurality of servers or services can be contained in the request for acquiring the charging rate statistical information, sent from the user terminal 6 and the user terminal 6 can acquire the charging rate statistical information concerning each server service through the charging rate statistic retrieval server 15. The charging rate statistic retrieval server 15 also has a function of retrieving the server service that can be accessed under the most advantageous condition from among the server services specified from the user terminal 6 and informing the user terminal 6 of the server service.

In FIG. 3, the provider access unit 5 is also provided with the charging unit 8 as a provider access unit-cum-charging unit 10. A connection unit 21 provided on the access network 2 is a unit for connecting the user terminal 6 to the access network 2, and a base station, a switching system, or the like corresponds to the connection unit 21.

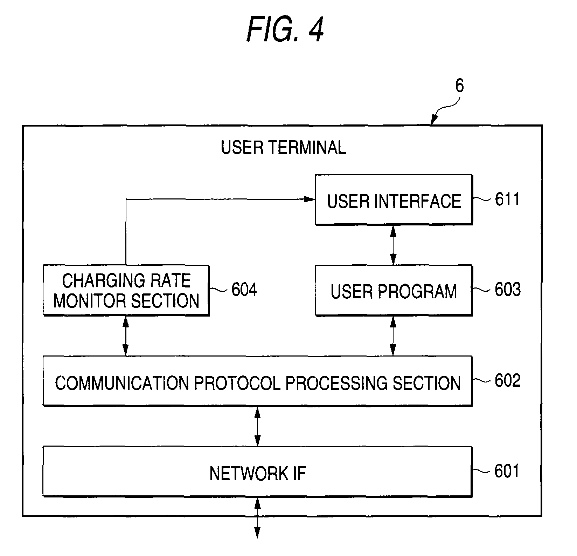

FIG. 4 shows an example of the configuration of the user terminal 6 shown in FIGS. 1 to 3. Here, the configuration to acquire the charging rate from the charging rate server 7 and providing the charging rate for the user will be discussed.

As shown in FIG. 4, the user terminal 6 comprises a network interface (network I/F) 601, a communication protocol processing section 602, a user program 603, a charging rate monitor section 604, and a user interface 611. The user program 603 is a program actually used by the user and is a client program responsive to the service provided by the contents server 4. A WWW browser is an example of the user program 603.

The communication protocol processing section 602 is a processing section of TCP/IP/PPP, etc., of Internet protocol, for example. Of course, the protocol may be any other protocol than the Internet protocol, but some communication protocol becomes necessary to generally conduct communications. The network interface (network I/F) 601 is an interface for connecting to the access network 2 . The charging rate monitor section 604 performs processing for acquiring the current charging rate information transmitted from the charging rate server 7 or the contents server-cum-charging rate server 9 through the communication protocol processing section 602 and displaying the charging rate information on a screen through the user interface 611. The user sees the charging rate and determines whether to continue or discontinue the current connection by himself or herself.

FIG . 5 shows another example of the user terminal 6, wherein connection is continued or discontinued automatically based on the value of the current charging rate and the setup value specified by the user.

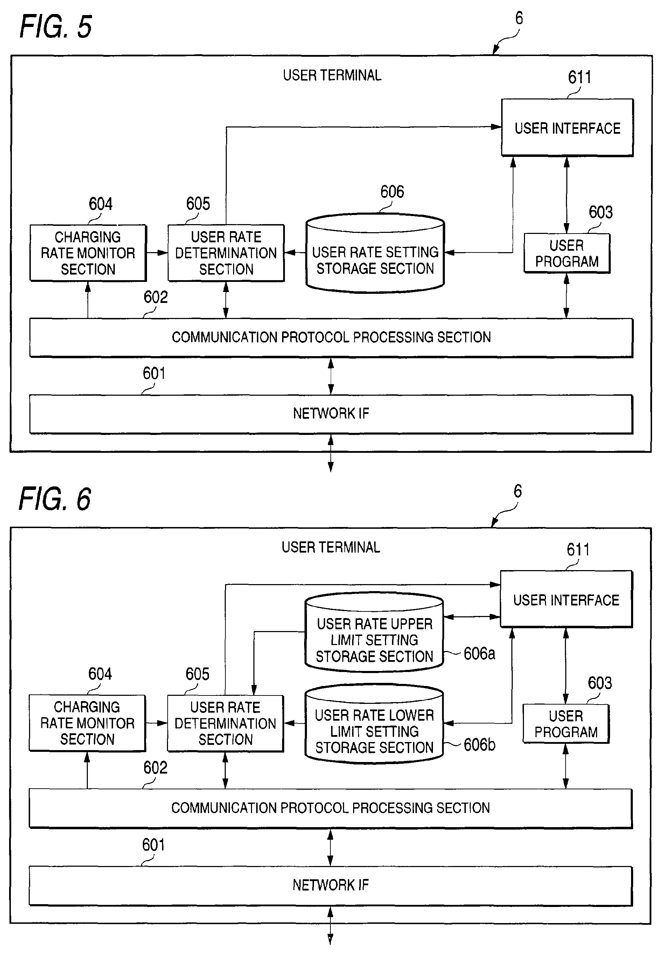

That is, in FIG. 5, the user terminal 6 comprises a user rate determination section 605 and a user rate setting storage section 606 in addition to the network interface (network I/F) 601, the communication protocol processing section 602, the user program 603, the charging rate monitor section 604, and the user interface 611 described above.

The user rate setting storage section 606 is provided for storing the threshold value of the charging rate specified by the user (user rate) . The user can specify the user rate through the user program 603 and the specified value is stored in the user rate setting storage section 606. The user rate determination section 605 compares the current charging rate value acquired by the charging rate monitor section 604 with the user rate stored in the user rate setting storage section 606 and automatically determines whether the current connection is to be continued or discontinued based on the comparison result. For example, a control method of automatically discontinuing the connection when the charging rate corresponding the current contents server 4 being connected becomes higher than the user rate is possible. Reconnection may be made later when the charging rate falls below the user rate. The control manner may be stored in the user rate setting storage section 606 together with the user rate. With the connection state maintained, the user terminal 6 may voluntarily refrain from only message transmission from the user terminal 6 to the contents server 4.

FIG. 6 shows a further improvement of the configuration of the user terminal 6 in FIG. 5. The upper and lower limits of the user rate are set and are stored in a user rate upper limit storage section 606a and a user rate lower limit storage section 606b respectively. When the current charging rate becomes higher than the user rate stored in the user rate upper limit storage section 606a, the user rate determination section 605 controls the communication protocol processing section 602 to disconnect the current connection or voluntarily refrain from data transmission, and when the current charging rate falls below the user rate stored in the lower rate upper limit storage section 606b, the user rate determination section 605 controls the communication protocol processing section 602 to reconnect or restart data transmission.

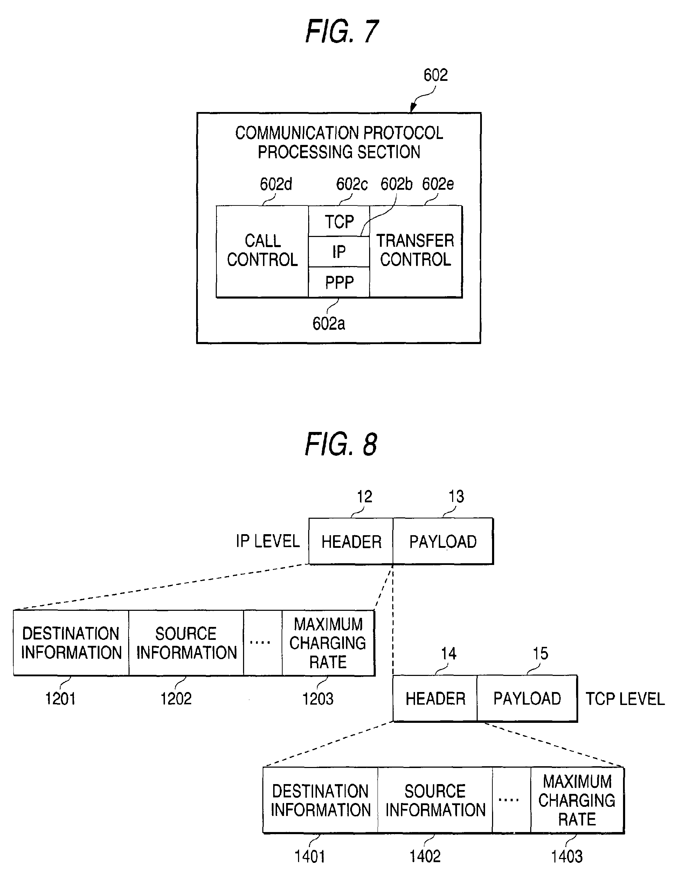

The specific arrangement of the automatic disconnection/reconnection processing of the communication protocol processing section 602 will be discussed with reference to FIG. 7.

The communication protocol processing section 602 is made up of a PPP processing section 602a, an IP processing section 602b, a TCP processing section 602c, a call control section 602d, and a transfer control section 602e. The transfer control section 602e controls information transfer in each layer as to whether or not to transfer information, whether or not to extend the time-out time, etc., in response to a request from the user rate determination section 605. An instruction from the user rate determination section 605 is also sent to the call control section 602d. For example, when a given time interval has elapsed as the refraining time (data transmission stop time), the call control section 602d controls so as to disconnect the line and at the restart time, recover the state at the disconnection time. The user rate determination section 605 or the call control section 602d measures the refraining time. To restart, the user rate determination section 605 sends an instruction to the call control section 602d.

Next, an example of containing the maximum allowable charging rate specified by the user in a message sent from the user terminal 6 to the contents server 4 will be discussed with reference to FIG. 8.

Generally, when information is transferred using TCP/IP, TCP layer information is stored as payload at IP level. FIG. 8 shows how a header 12 and a payload 13 at the IP level form information at the IP level. When the maximum allowable charging rate is entered in a message sent from the user terminal 6 to the contents server 4, maximum charging rate information 1203 indicating the maximum allowable charging rate specified by the user together with information such as destination information 1201 and source information 1202 is put on the header 12 at the IP level. The maximum charging rate information 1203 is a value indicating the maximum charging rate allowed by the user for the contents server 4 indicated by the destination information 1201.

The payload 13 at the IP level contains a header 14 and a payload 15 at the TCP level; to specify the maximum allowable charging rate for service in the contents server 4, maximum charging rate information 1403 indicating the maximum allowable charging rate specified by the user for the service together with information such as destination information 1401 specifying the servicing party and source information 1402 is put on the header 14.

That is, the maximum allowable charging rate for the accessed contents server 4 is entered in the maximum charging rate 1203 in the IP field and the maximum allowable charging rate for the service in the server is entered in the maximum charging rate 1403 in the TCP field.

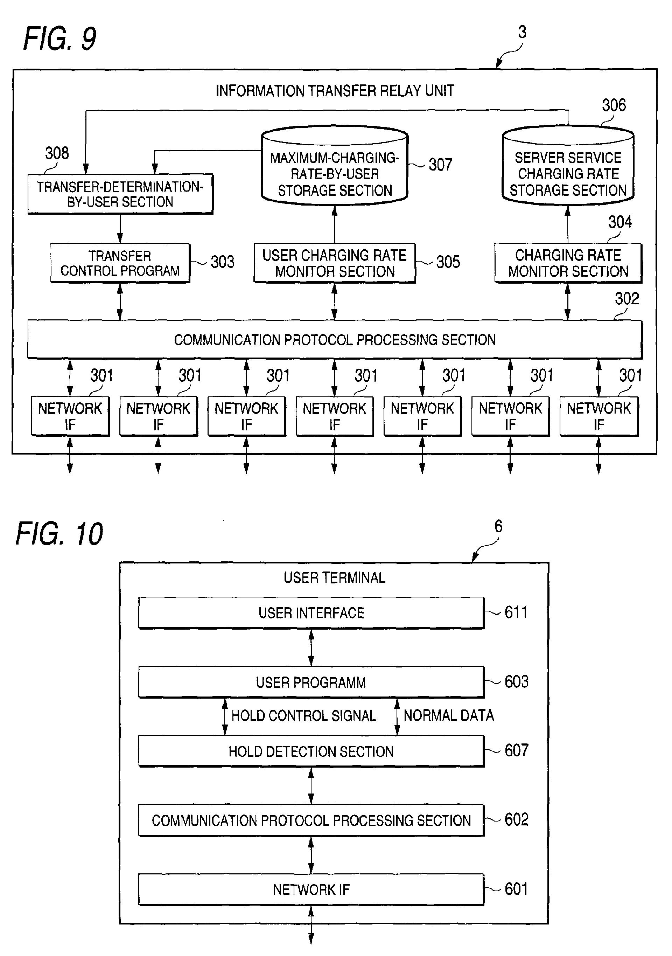

FIG. 9 shows an example of the information transfer relay unit 3 having a mechanism of referencing the maximum allowable charging rate transmitted from the user terminal 6 and when the current charging rate exceeds the maximum allowable charging rate, holding information transfer between the user and the contents server 4.

As shown in the figure, the information transfer relay unit 3 comprises a plurality of network interfaces (network IFs) 301, a communication protocol processing section 302, a transfer control program 303, a charging rate monitor section 304, a user charging rate monitor section 305, a server service charging rate storage section 306, a maximum-charging-rate-by-user storage section 307, and a transfer-determination-by-user section 308.

The information transfer relay unit 3, which is implemented as, for example, one function section of the provider access unit 5, monitors the maximum charging rate contained in a message for each user terminal 6 and also monitors the charging rate concerning server service from the charging rate server 7. The maximum charging rate information contained in the message sent from the user terminal 6 to the contents server 4 is taken out through the communication protocol processing section 302 and the user charging rate monitor section 305 and is stored in the maximum-charging-rate-by-user storage section 307 by user. The charging rate concerning server service from the charging rate server 7 is acquired through the communication protocol processing section 302 and the charging rate monitor section 304 and whenever the charging rate information is updated by the charging rate monitor section 304, the charging rate is newly stored in the server service charging rate storage section306. Thus, the most recent charging rate for each server service is always retained in the server service charging rate storage section 306.

The transfer-determination-by-user section 308 determines whether or not the charging rate of the server service used by the user falls within the range of the maximum charging rate specified by the user. The transfer-determination-by-user section 308 sends the determination result, a transfer or hold instruction to the transfer control program 303, which then performs control to execute transfer or hold transfer. When a hold determination condition (for example, when the maximum charging rate is exceeded, transfer may be held) is matched, message relay between the user terminal 6 and the contents server 4 is held and at the same time, the transfer control program 303 sends an information transfer hold start message to the user terminal 6. When the condition is not applied, the transfer control program 303 sends an information transfer hold release message to the user terminal 6 and message relay is restarted.

Such hold control is effective particularly when the data amount charging system is used, and makes it possible to ease access concentration without involving fruitless charging on hold.

FIG. 10 shows an example of the configuration of the user terminal 6 used in combination with the information transfer relay unit 3 with the transfer hold function in FIG. 9. The user terminal 6 is provided with a hold detection section 607 inserted between the communication protocol processing section 602 and the user program 603 in addition to the network interface (network I/F) 601, the communication protocol processing section 602, the user program 603, the charging rate monitor section 604, and the user interface 611 described above . [0053]

Upon reception of an information transfer hold start message from the information transfer relay unit 3, the hold detection section 607 sends a hold control signal indicating holding to the user program 603. Upon reception of an information transfer hold release message from the information transfer relay unit 3, the hold detection section 607 informs the user program 603 that hold has been released, and instructs the communication protocol processing section 602 to return to the normal operation.

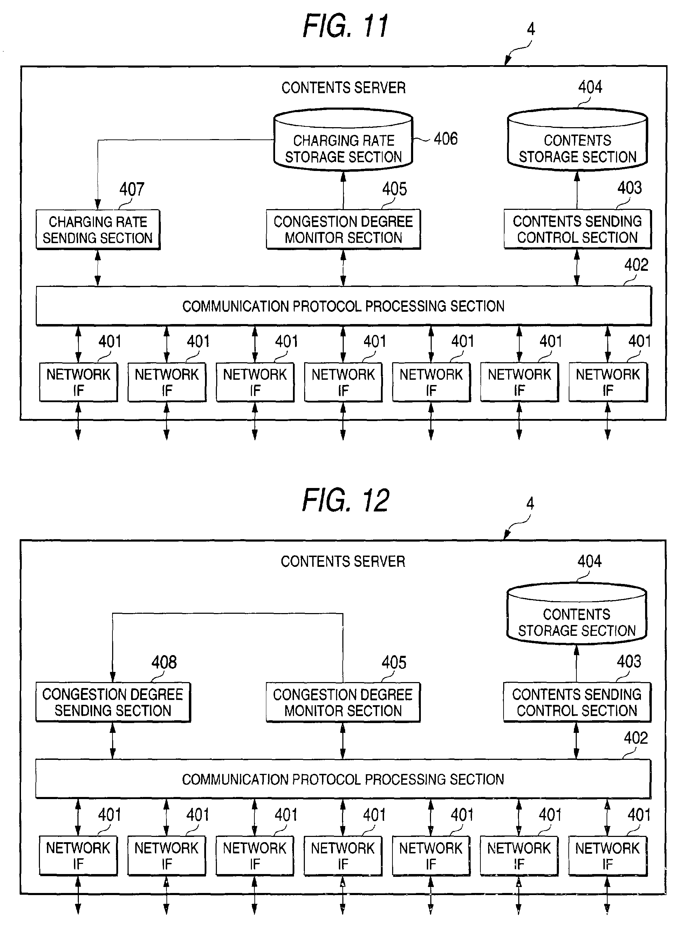

FIG. 11 shows the configuration of the contents server 4 with a charging rate sending function. The contents server 4 operates the above-described contents server-cum-charging rate server 9 and is made up of a plurality of network interfaces (network IFs) 401, a communication protocol processing section 402, a contents sending control section 403, a contents storage section 404, a congestion degree monitor section 405, a charging rate storage section 406, and a charging rate sending section 407, as shown in the figure.

The contents sending control section 403 performs processing for reading the contents requested by the user terminal 6 from the contents storage section 404 and sending the contents through the communication protocol processing section 402 and the network interface (network IF) 401 to the user terminal 6. Whenever a user's request arrives at the contents server 4, the congestion degree monitor section 405 detects the congestion degree for each type of service and stores the value of the congestion degree in the charging rate storage section 406 as the current access concentration degree. The congestion degree or the access concentration degree is given by the number of access times per unit time, etc., for example.

Conversion information for converting the access concentration degree into the charging rate is also stored in the charging rate storage section 406. The charging rate sending section 407 determines the current charging rate for each service based on the access concentration degree of each service and the conversion information retained in the charging rate storage section 406, and sends the current charging rate to the communication protocol processing section 402. The communication protocol processing section 402 combines the charging rate information from the charging rate sending section 407 and the contents information into the contents information with the charging rate, then sends the contents information with the charging rate to the user terminal 6 accessing the contents server 4.

FIG. 12 shows the configuration of the contents server 4 having no charging rate sending function. This configuration corresponds to the case where the contents server 4 is provided independently of the charging rate server 7. In FIG. 12, a congestion degree sending section 408 is provided in place of the charging rate storage section 406 and the charging rate sending section 407 in FIG. 11.

The congestion degree (access concentration degree) for each service detected by the congestion degree monitor section 405 is sent through the congestion degree sending section 408 to the communication protocol processing section 402. The communication protocol processing section 402 performs processing of transmitting the congestion degree (access concentration degree) for each service received from the congestion degree sending section 408 to the charging rate server 7.

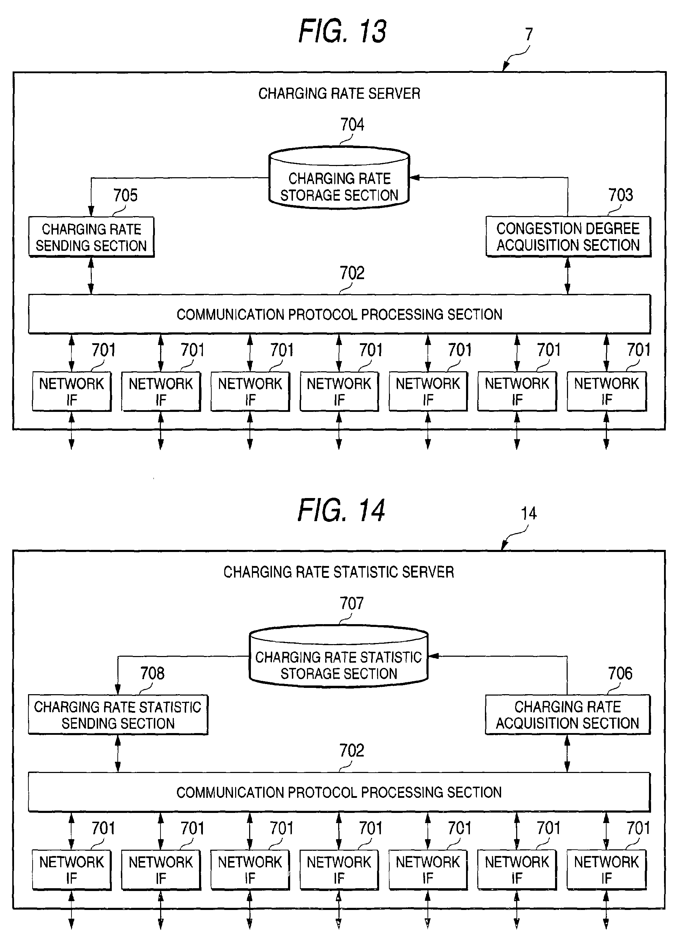

FIG. 13 shows the configuration of the charging rate server 7 for providing a function of converting congestion degree information into charging rate information when the congestion degree information is output from the contents server 4. Upon reception of charging rate inquiry information from the user terminal 6, the charging rate server 7 returns the charging rate as a response to the user terminal 6. The server address of the target contents server 4 and the service ID are entered in the charging rate inquiry information. The charging rate server 7 comprises a plurality of network interfaces (network IFs) 701, a communication protocol processing section 702, a congestion degree acquisition section 703, a charging rate storage section 704, and a charging rate sending section 705, as shown in the figure.

The congestion degree acquisition section 703 collects the current congestion degree (access concentration degree) from each contents server 4 through the communication protocol processing section 702 and the network interface (network IF) 701 and stores the value of the current congestion degree in the charging rate storage section 704 by server service. Conversion information for converting the access concentration degree into the charging rate is also stored in the charging rate storage section 704. Upon reception of charging rate inquiry information from the user, the charging rate sending section 705 determines the current charging rate concerning the specified server service based on the access concentration degree to the server service and the conversion information retained in the charging rate storage section 704, and transmits the current charging rate to the user terminal 6 through the communication protocol processing section 702 and the network interface (network IF) 701.

FIG. 14 shows the configuration of the above-described charging rate statistic server 14. The charging rate statistic server 14 retains the charging rate for each server service for a constant period of time and prepares charging rate statistical information, then transmits the charging rate statistical information to the requesting user terminal 6. An example of improving the configuration of the charging rate server 7 in FIG. 13 to realize the charging rate statistic server 14 will be discussed.

That is, the charging rate statistic server 14 in FIG. 14 is provided with a charging rate acquisition section 706, a charging rate statistic storage section 707, and a charging rate statistic sending section 708 in place of the congestion degree acquisition section 703, the charging rate storage section 704, and the charging rate sending section 705 in FIG. 13. The charging rate acquisition section 706 collects the server service charging rate periodically from the charging rate server 7 and the contents server-cum-charging rate server 9 and stores the charging rate in the charging rate statistic storage section 707 in time series. The charging rate is collected and stored continuously for a constant period of time, whereby the charging rate statistical information by server service is prepared in the charging rate statistic storage section 707. If a request for providing the charging rate statistical information is received from the user terminal 6 or the above-described charging rate statistic retrieval server 15, the charging rate statistic sending section 708 takes out the charging rate statistical information concerning the server service from the charging rate statistic storage section 707 and transmits the charging rate statistical information through the communication protocol processing section 702 and the network interface (network IF) 701 to the requesting user terminal 6 or the requesting charging rate statistic retrieval server 15.

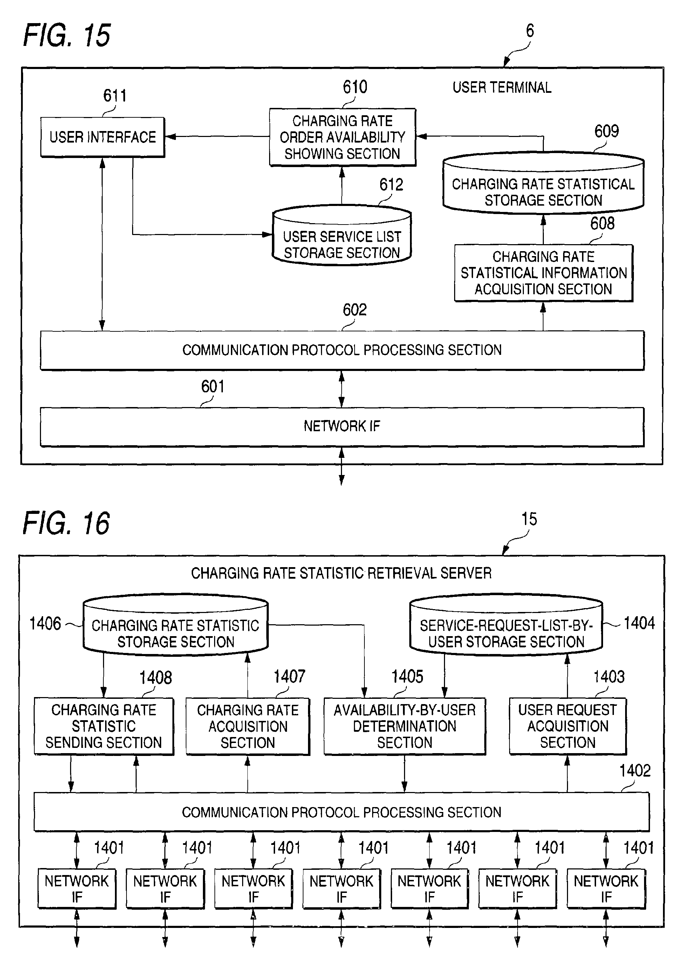

FIG. 15 shows the configuration of the user terminal 6 capable of using the charging rate statistical information to list the server services having a high possibility of availability at present for the user. The user terminal 6 is provided with a charging rate statistical information acquisition section 608, a charging rate statistic storage section 609, a charging rate order availability showing section 610, and a use service list storage section 612 as shown in the figure in addition to the network interface (network IF) 601, the communication protocol processing section 602, and the user interface 611 described above.

The charging rate statistical information acquisition section 608 acquires the charging rate statistical information concerning each server service from the charging rate statistic server 14 and stores the charging rate statistical information in the charging rate statistic storage section 609. The user sets a list of the servers and services to be used in the use service list storage section 612 through the user interface 611. The charging rate order availability showing section 610 lists the server services in the order they can be accessed under the most advantageous condition at the lowest charging rate at present based on the charging rate statistical information from the charging rate statistic storage section 609 and the use service list information from the use service list storage section 612, and displays the list on a screen through the user interface 611. That is, the server services that can be accessed under the most advantageous condition at present are retrieved in order among the server services specified in the use service list information and are presented to the user. The listing function in the availability order can be realized in not only the user terminal 6, but also the charging rate statistic server 14, the charging rate statistic retrieval server 15, the charging rate server 7, the contents server 4, the information transfer relay unit 3, etc.

FIG. 16 shows the configuration of providing the charging rate statistic retrieval server 15 with the listing function in the availability order. The charging rate statistic retrieval server 15 is made up of a plurality of network interfaces (network IFs) 1401, a communication protocol processing section 1402, a user request acquisition section 1403, a service-request-list-by-user storage section 1404, an availability-by-user determination section 1405, a charging rate statistic storage section 1406, a charging rate acquisition section 1407, and a charging rate statistic sending section 1408, as shown in the figure.

The user lists the server services to be used and transmits the list to the charging rate statistic retrieval server 15. This information is acquired by the user request acquisition section 1403 and is stored in the service-request-list-by-user storage section 1404. The charging rate for each server service acquired from the network is stored in the charging rate statistic storage section 1406, whereby the charging rate statistical information for each server service is retained in the charging rate statistic storage section 1406. Of course, the charging rate statistical information for each server service may be acquired from the charging rate statistic server 14 and be stored in the charging rate statistic storage section 1406.

Upon reception of a request for acquiring the charging rate statistical information from the user, the charging rate statistic sending section 1408 takes out the charging rate statistical information for the server service requested from the charging rate statistic storage section 1406 and transmits the charging rate statistical information through the communication protocol processing section 1402 and the network interface (network IF) 1401 to the requesting user terminal 6.

Upon reception of a request for listing the server services in the availability order from the user terminal 6, the availability-by-user determination section 1405 creates availability information (the server service at the lowest charging rate, the server service at the least congestion comes the top) based on the server service list corresponding to the user and the charging rate statistical information from the charging rate statistic storage section 1406, and transmits the availability information through the communication protocol processing section 1402 and the network interface (network IF) 1401 to the requesting user terminal 6.

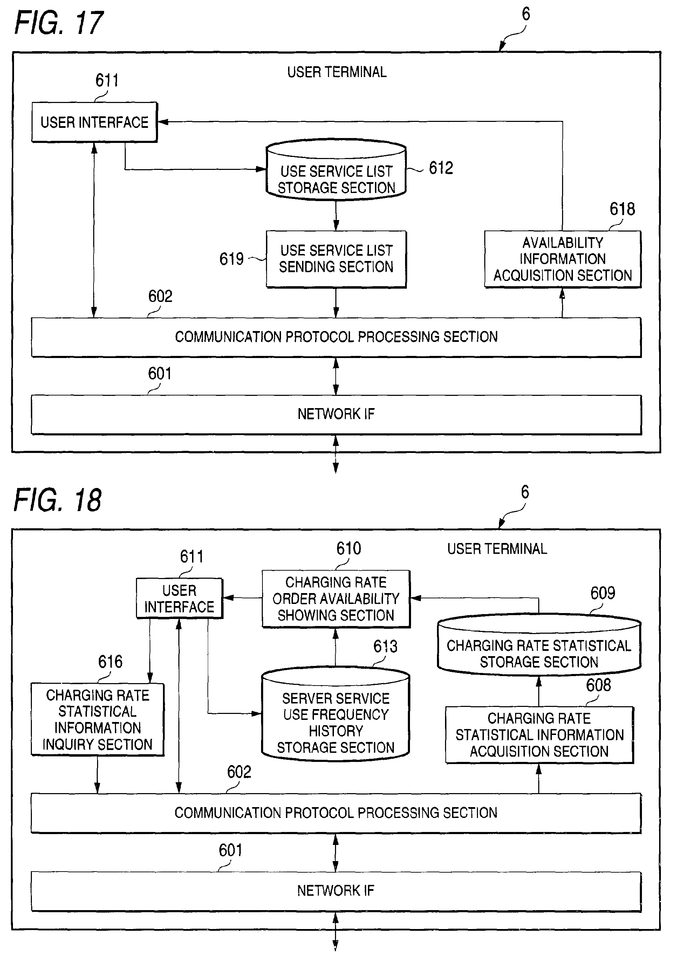

FIG. 17 shows the configuration of the user terminal 6 to use the charging rate statistic retrieval server 15 in FIG. 15.

The user terminal 6 is provided with an availability information acquisition section 618 and a use service list sending section 619 in addition to the network interface (network IF) 601, the communication protocol processing section 602, the user interface 611, and the use service list storage section 612 described above. The user previously retains a list of the server services to be used in the use service list storage section 612. The use service list sending section 619 takes out the use service list stored in the use service list storage section 612 and enters the use service list in retrieval inquiry information, then transmits to the charging rate statistic retrieval server 15 in FIG. 16. The charging rate statistic retrieval server 15 lists the server services specified in the use service list in the order they can be accessed under the most advantageous condition based on the charging rate statistical information for each server service as described above, and returns the list to the user terminal 6 as a response to the inquiry. The response is acquired by the availability information acquisition section 618 and is displayed on a screen through the user interface 611.

FIG. 18 shows another configuration example of the user terminal 6 capable of using the charging rate statistical information to list the server services having a high possibility of availability at present for the user. In the example, the following processing is performed: A server service use frequency history is retained in the user terminal instead of creating a list of the server services to be used by the user and the charging rate statistical information corresponding to the highly frequently used server services is acquired from the charging rate statistic server 14, then in the user terminal 6, a server service list in the availability order (from high to low) is prepared based on the use frequency history and the charging rate statistical information and is shown for the user. To realize the processing, in FIG. 18, a server service use frequency history storage section 613 is provided in place of the use service list storage section 612 in FIG. 15.

Whenever the user terminal 6 accesses the contents server 4 and service is received, information of the server address, the service ID, etc., is stored in the server service use frequency history storage section 613 as use frequency history information by server service. A charging rate statistical information inquiry section 616 creates a list of the server services to be inquired based on the use frequency history information stored in the server service use frequency history storage section 613. The charging rate statistical information inquiry section 616 issues an inquiry about several highly frequently used server services to the charging rate statistic server 14. The charging rate statistical information, a response from the charging rate statistic server 14, is acquired by the charging rate statistical information acquisition section 608 and is stored in the charging rate statistic storage section 609.

The charging rate order availability showing section 610 lists the server services in the order they can be accessed under the most advantageous condition at the lowest charging rate at present among the highly frequently used server services based on the charging rate statistical information from the charging rate statistic storage section 609 and the use frequency history information stored in the server service use frequency history storage section 613, and displays the list on a screen through the user interface 611.

The listing function in the availability order (from high to low) based on the use frequency history information and the charging rate statistical information for each server service can be provided in not only the user terminal 6, but also the charging rate statistic retrieval server 15.

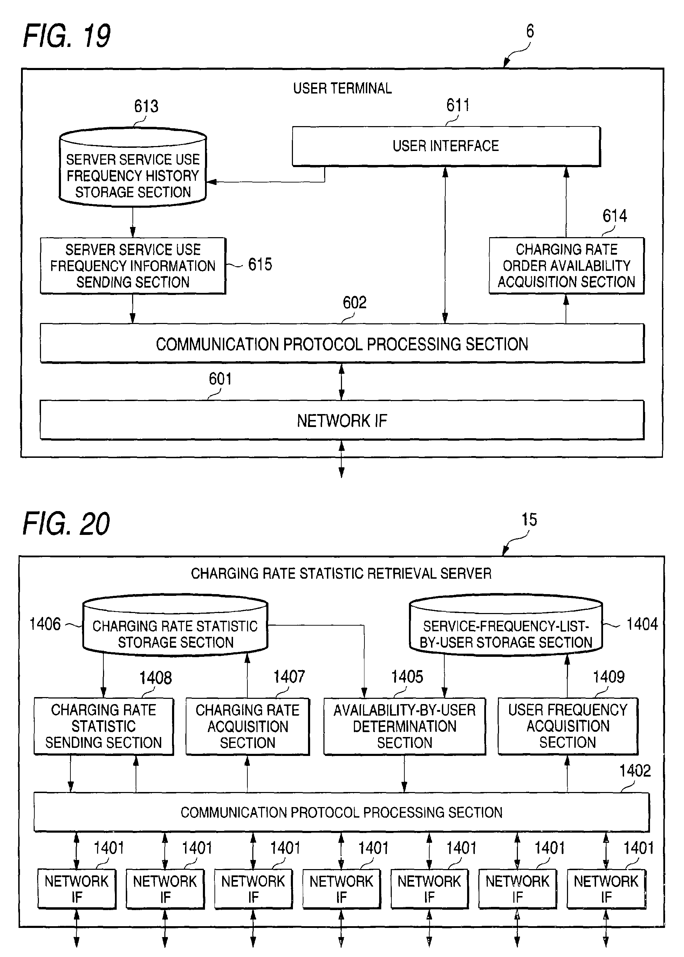

FIG. 19 shows the configuration of the user terminal 6 to use the use frequency history information to acquire a list in the availability order by inquiring the charging rate statistic retrieval server 15.

In FIG. 19, the use frequency history information is stored in the server service use frequency history storage section 613. The use frequency history information is sent by a server service use frequency information sending section 615 to the charging rate statistic retrieval server 15. The charging rate statistic retrieval server 15 creates availability information indicating a list in the availability order and returns the availability information to the user terminal 6. The availability information is acquired by a charging rate order availability acquisition section 614 and is displayed on a screen through the user interface 611.

FIG. 20 shows the configuration of the charging rate statistic retrieval server 15 using the use frequency history information from the user terminal 6 for retrieval to prepare use frequency information.

When the use frequency history information arrives at the charging rate statistic retrieval server 15 from the user terminal 6, it is acquired by a user frequency acquisition section 1409 and is recorded in service-frequency-list-by-user storage section 1404. The charging rate for each server service is acquired by the charging rate acquisition section 1407 from the charging rate server 7 and is retained in the charging rate statistic storage section 1406.

Upon reception of a request for acquiring charging rate statistical information from the user terminal 6, the charging rate statistic sending section 1408 takes out the corresponding charging rate statistical information from the charging rate statistic storage section 1406 and transmits the charging rate statistical information to the user terminal 6. When a server service use frequency history arrives from the user terminal and is recorded in the service-frequency-list-by-user storage section 1404, the availability-by-user determination section 1405 creates an availability list based on the use frequency information and the charging rate statistical information and transmits the availability list to the user terminal 6.

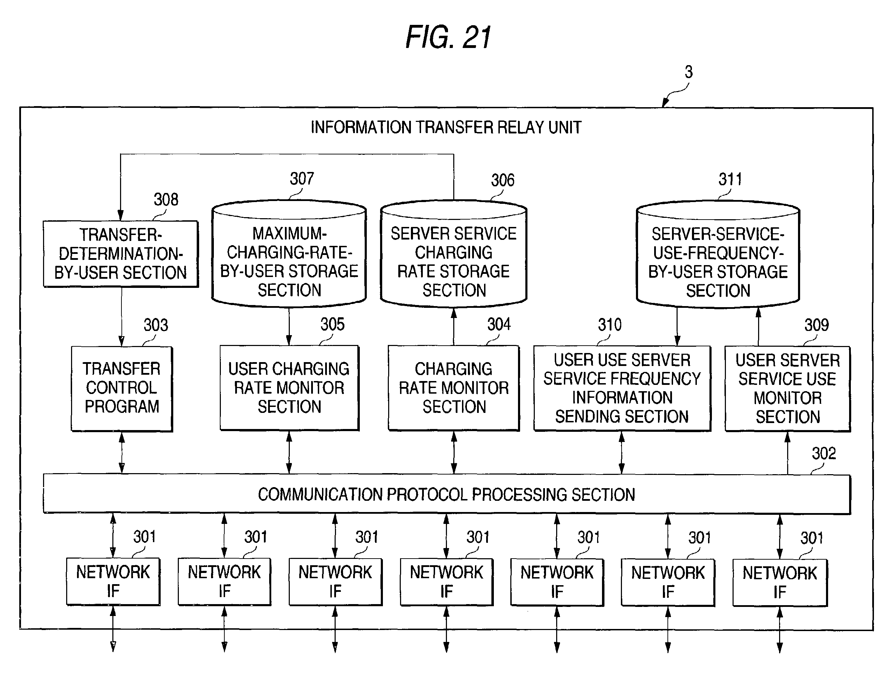

FIG. 21 shows the configuration of the information transfer relay unit 3 in FIG. 9 to which a management function of server service use frequency history information by user is added. The information transfer relay unit 3 in FIG. 21 is provided with a user server service use monitor section 309, a user use server service frequency information sending section 310, and a server-service-use-frequency-by-user storage section 311 for frequency history information management by user in addition to the plurality of network interfaces (network IFs) 301, the communication protocol processing section 302, the transfer control program 303, the charging rate monitor section 304, the user charging rate monitor section 305, the server service charging rate storage section 306, the maximum-charging-rate-by-user storage section 307, and the transfer-determination-by-user section 308 previously described with reference to FIG. 9.

In the user server service use monitor section 309, a server service access request to the contents server 4 from the user terminal 6 is acquired and is recorded in the server-service-use-frequency-by-user storage section 311. As server service access requests are stored by user, server service use frequency history information is retained in the server-service-use-frequency-by-user storage section 311 for each user. Upon reception of a request from the user terminal 6, the user use server service frequency information sending section 310 takes out use frequency history information from the server-service-use-frequency-by-user storage section 311 and transmits the use frequency history information to the user terminal 6. Thus, it is made possible for each user terminal 6 to acquire the use frequency history information as required and use the information as inquiry information to obtain availability information in the charging rate order without managing the use frequency history information by the user terminal 6.

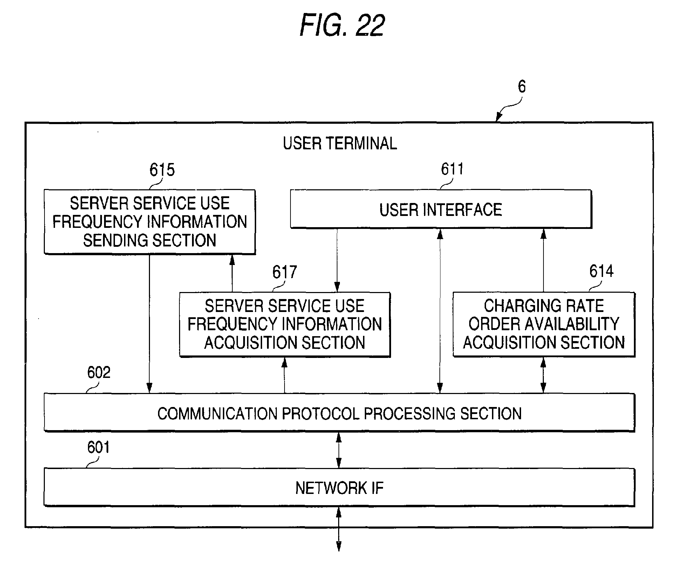

FIG. 22 shows the configuration of the user terminal 6 for inputting server service use frequency information from the information transfer relay unit 3 having a server service use frequency information sending function in FIG. 21 and acquiring availability information from the charging rate statistic retrieval server 15 in FIG. 20, thereby showing the server services having high availability for the user.

A server service use frequency information acquisition section 617 acquires server service use frequency information from the information transfer relay unit 3 and sends the acquired server service use frequency information to the server service use frequency information sending section 615. The server service use frequency information sending section 615 transmits inquiry information containing the server service use frequency information to the charging rate statistic retrieval server 15 in FIG. 20. The charging rate statistic retrieval server 15 creates availability information indicating a list in the availability order and returns the availability information to the user terminal 6. The availability information is acquired by the charging rate order availability acquisition section 614 and is displayed on a screen through the user interface 611.

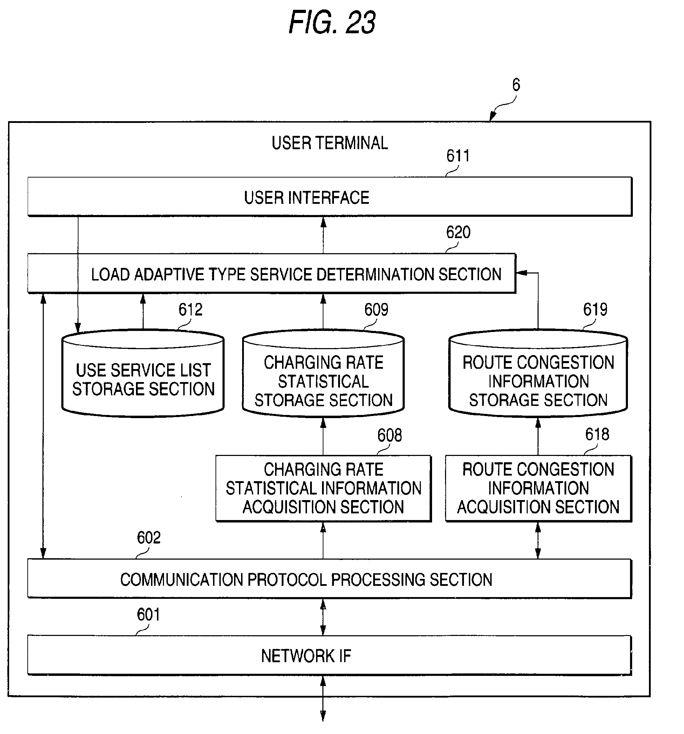

FIG. 23 shows a configuration example of the user terminal 6 for making it possible to select server service with good responsivity with route congestion information added to charging rate information. The user terminal 6 is provided with a route congestion information acquisition section 618, a route congestion information storage section 619, and a load adaptive type service determination section 620 in addition to the charging rate statistical information acquisition section 608, the charging rate statistic storage section 609, and the use service list storage section 612 previously described with reference to FIG. 15.

The route congestion information acquisition section 618 collects the congestion degree (traffic) on the route between the contents server 4 and the user terminal 6 for each contents server 4 specified in a user service list and sends a responsivity message to know the congestion degree of each information transfer relay unit 3 existing on the route and receives the result. The result is stored in the route congestion information storage section 619. The charging rate statistical information acquisition section 608 acquires the charging rate statistical information from the charging rate statistic server 14 concerning each server service specified in the use service list and stores the charging rate statistical information in the charging rate statistic storage section 609. The load adaptive type service determination section 620 selects the server service with the best responsivity at the lowest charging rate based on the charging rate statistical information, the user-set use service list, and the route congestion information, and an access request to the server service is output through the communication protocol processing section 602 and the network interface (network IF) 601.

The charging rate and the traffic on the route are thus considered for selecting the server service that can be accessed under the most advantageous condition at present, whereby it is made possible to guide the user in knowing the server service that can be accessed under the more advantageous condition than that when only the charging rate is used. Like the above-described availability information, the traffic on the route may also be considered for creating a list indicating the server services that can be accessed under the most advantageous condition at present in order and the list may be sent to the user through the user interface 611.

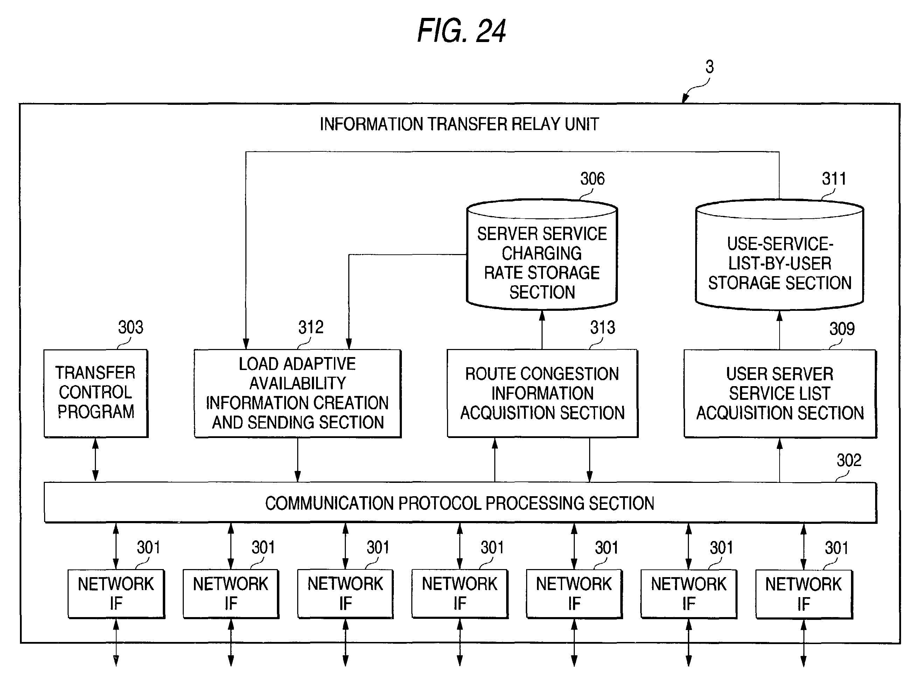

FIG. 24 shows a configuration example of the information transfer relay unit 3 using route congestion information. In the information transfer relay unit 3, a user server service list acquisition section 309 acquires use service list information transmitted from each user terminal 6 and stores the use service list information in a use-service-list-by-user storage section 311 by user. The charging rate statistical information for each server service is stored in the server service charging rate storage section 306 and further the congestion information acquired by a route congestion information acquisition section 313 is also stored in the server service charging rate storage section 306. That is, the route congestion information acquisition section 313 collects the congestion information on the route to the server for each server service desired by each user and stores the congestion information in the server service charging rate storage section 306. Responding to an inquiry from the user terminal 6, a load adaptive availability information creation and sending section 312 creates a list in the order of the server services with the best responsivity at the low charging rate based on the use service list information in the corresponding user terminal 6 and the charging rate statistical information and the route congestion information in the server service charging rate storage section 306 and transmits the list to the requesting user terminal 6.

As described above, in the embodiment, the charging rate can be varied in response to the access concentration degree to each contents server 4 and the charging rate information can be provided for the requesting party through the network, so that access concentration can be eased. Since the server service with the best responsivity at the lowest charging rate can be selected by using the charging rate information and the route congestion information in combination, it is made possible to access the target server service efficiently.

The configurations of the user terminals and the servers and the relay units on the network can be appropriately combined for use, of course. Charging control mainly about the data communication charges has been described; for chargeable contents, the charging rate of the contents may be varied in response to the access concentration degree to each contents server 4.

In the examples previously described with reference to FIGS. 11, 12, 14, 16, and 20, a plurality of network interfaces exist, but the number of network interfaces need not necessarily be plural.

The invention is not limited to the above-described embodiment and changes and variations may be made without departing from the spirit or scope of the invention. Further, the above-described embodiment contains various stages of the invention and various aspects of the invention can be extracted by appropriately combining a plurality of components disclosed. For example, if the problems described in the Related Art can be solved and the advantages described as follows can be provided although several components are deleted from all components shown in the embodiment, the configuration with the components deleted can be extracted as the invention.

As described above, according to the invention, the access concentration degree by accessed server is considered for changing the charging rate, whereby the number of access times to each server can be adjusted impartially and efficiently and it is made possible to minimize degradation of response between the server and the user terminal. Particularly, prediction based on the charging rate statistical information and the route congestion information are used in combination, whereby the server that can be acceded under an advantageous condition can be selected and it is made possible to provide service with good responsivity.

## Claims

1. A charging control system placed on a communication network involving charging, the charging control system for controlling the charge, the charging control system comprising:
a detection section for detecting an access concentration degree to a server for providing a service for a user terminal through the communication network;
a determination section for determining a charging rate for communication to the server based on the access concentration degree to change the charging rate in response to the access concentration degree to the server; and
a charging rate information providing section for providing a requesting party using the user terminal with information on the charging rate through the communication network.

2. The charging control system as claimed in claim 1 wherein the charging rate information providing section includes a section for providing the information on the charging rate for the user terminal currently accessing the server.

3. The charging control system as claimed in claim 1 wherein a message from the user terminal to the server contains information indicating a maximum allowable charging rate,
the charging control system further comprising:
a relay control section for holding message relay between the user terminal and the server if the current charging rate determined exceeds the maximum allowable charging rate.

4. The charging control system as claimed in claim 1 further comprising:
a section for preparing charging rate statistical information indicating time-series variations in the charging rate based on a change history of the charging rate over a predetermined period of time in the past; and
a section for providing the charging rate statistical information for the requesting user terminal a request from the user terminal.

5. The charging control system as claimed in claim 4 wherein the charging rate statistical information is prepared for each of a plurality of predetermined servers,
the charging control system further comprising:
a charging rate statistical information retrieval section for retrieving the server that is accessed under an advantageous condition at present from among the plurality of servers, in response to an inquiry sent from the user terminal, based on the charging rate statistical information corresponding to each of the plurality of servers, to provide the retrieval result for the user terminal.

6. The charging control system as claimed in claim 5 wherein the inquiry condition sent from the user terminal to the charging rate statistical information retrieval section contains access frequency information indicating the server accessed by the user terminal and the access frequency; and
the charging rate statistical information retrieval section selects a plurality of servers to be retrieved from the plurality of predetermined servers based on the access frequency information and retrieves one of the plurality of servers that is accessed under the advantageous condition at present from among the plurality of servers selected.

7. The charging control system as claimed in claim 1 further comprising:
a section for detecting traffic on the route between the user terminal and each of a plurality of servers to be accessed by the user terminal; and
a section for determining one of the plurality of servers that can be accessed under the advantageous condition at present from among the plurality of servers based on the current charging rate corresponding to each of the plurality of servers and the detected traffic.

8. A terminal used as a user terminal in a communication system in response to an access concentration degree to an accessed server for determining a charging rate concerning communication involving access to the server, the terminal comprising:
a receiver for receiving information concerning a current charging rate provided by the communication system; and
a display for displaying the information concerning the current charging rate.

9. The terminal as claimed in claim 8 further comprising a section for controlling continuing or stopping the communication involving an access to the server based on the current charging rate received and a preset value.

10. The terminal as claimed in claim 8 further comprising:
a section for receiving charging rate statistical information indicating time-series change in the charging rate concerning each of a plurality of servers to be accessed from the communication system; and
a retrieval section for retrieving one of the plurality of servers that is accessed under an advantageous condition at present from among the plurality of servers based on the charging rate statistical information corresponding to each of the plurality of servers.

11. The terminal as claimed in claim 10 further comprising a section for receiving traffic information concerning each route between each of a plurality of servers to be accessed and the terminal from the communication system,
wherein the retrieval section retrieves one of the plurality of servers that is accessed under the advantageous condition at present from among the plurality of servers based on the charging rate statistical information corresponding to each of the plurality of servers and the traffic information.

12. Acharging control system placed on a communication network involving charging, the charging control system for controlling the charge, the charging control system comprising:
a detector which detects an access concentration degree to a server for providing a service for a user terminal through the communication network;
a determination section which determines a charging rate for communication to the server based on the access concentration degree to change the charging rate in response to the access concentration degree to the server; and
a charging rate information providing section which provides a requesting party using the user terminal with information on the charging rate through the communication network.
